# EUROPÄISCHE PATENTSCHRIFT

(11) **EP 3 582 387 B1**
(45) Veröffentlichungstag und Bekanntmachung des Hinweises auf die Patenterteilung: **17.03.2021**
(21) Anmeldenummer: 19172846.8
(22) Anmeldetag: 06.05.2019
(51) Int. Cl.: H02P 3/00, H02P 3/18, H02P 21/00

(54) **ABBREMSVERFAHREN FÜR EINEN PERMANENTMAGNET-SYNCHRONMOTOR**
BREAKING METHOD FOR A PERMANENT MAGNET SYNCHRONOUS MOTOR
PROCÉDÉ DE DÉCÉLÉRATION POUR UN MOTEUR SYNCHRONE À AIMANTS PERMANENTS

(43) Veröffentlichungstag der Anmeldung: 18.12.2019
(73) Patentinhaber: PFEIFFER VACUUM GMBH, 35614 Asslar (DE)
(72) Erfinder: Wang, Jinou, 35606 Solms-Oberbiel (DE)
(74) Vertreter: Manitz Finsterwald Patent- und Rechtsanwaltspartnerschaft mbB

(56) Entgegenhaltungen:
- EP-A1- 3 422 559

## Beschreibung

Die vorliegende Erfindung betrifft ein Verfahren zum Abbremsen eines auf der Basis der Pulsweitenmodulation durch eine Raumzeigermodulation betreibbaren geberlosen Permanentmagnet-Synchronmotors, insbesondere eines Permanentmagnet-Synchronmotors einer Vakuumpumpe, bevorzugt einer Turbomolekularpumpe. Die Erfindung betrifft ferner eine Vorrichtung zur Ansteuerung eines geberlosen Permanentmagnet-Synchronmotors auf der Basis der Pulsweitenmodulation sowie eine Vakuumpumpe, insbesondere Turbomolekularpumpe, mit einem über eine solche Vorrichtung ansteuerbaren geberlosen Permanentmagnet-Synchronmotor.

In der EP 3 422 559 A1 ist ein Raumzeiger-Modulationsverfahren zur Ansteuerung eines Drehstrom-Wechselrichters für eine auf der Basis einer Pulsweitenmodulation betreibbare Drehstrommaschine, insbesondere eine Drehstrommaschine einer Vakuumpumpe, bevorzugt einer Turbomolekularpumpe, beschrieben. Dabei umfasst das Hochfahren der Drehstrommaschine nach einem Synchronisationsschritt und einem Hochfahrschritt einen Überprüfungsschritt mit einem im Fall des Scheiterns des Hochfahrens durchzuführenden Teilschritt, mit dem die Drehstrommaschine bis zum Stillstand abgebremst wird, woraufhin die Drehstrommaschine erneut hochgefahren wird. Im Abbremsteilschritt wird der zur Durchführung des Verfahrens verwendete Wechselrichter aktiviert und mit einem konstanten Spannungsvektor beaufschlagt sowie bis zu einem Einschaltzeitpunkt gewartet, woraufhin der Wechselrichter deaktiviert und bis zu einem Ausschaltzeitpunkt gewartet wird, bei dem alle Phasenströme den Wert Null annehmen Das aus der EP3422559A1 bekannte Abbremsverfahren weist die Merkmale des Oberbegriffs des Anspruchs 1 auf.

Vakuumpumpen wie zum Beispiel Turbomolekularpumpen werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen.

Unter einer Raumzeigermodulation versteht man in der Leistungselektronik ein Verfahren zur Steuerung von rotierenden elektrischen Maschinen auf der Basis der Pulsweitenmodulation. Basierend auf dieser Modulationsart ist es möglich, ein Mehrphasendrehstromsystem auf elektronischem Wege nachzubilden, wie es für den Bereich von Drehstrommaschinen benötigt wird. Durch die Raumzeigerdarstellung genügen zwei Größen, der Winkel des Raumzeigers und dessen Betrag oder Real- und/oder Imaginärteil, um die Flussdichteverteilung in der Maschine vorzugeben. Soll ein Dreiphasensystem nachgebildet werden, so benötigt man für jede der drei Phasen eine Halbbrücke, über die die Ausgangsspannungen der Phasen U, V, W auf das positive und das negative Zwischenkreispotential gelegt werden.

Eine geberlose Motorregelung funktioniert nur ab einer gewissen Drehzahl des Rotors. Im niedrigen Drehzahlbereich bis zum Stillstand des Rotors wird der Motor beim Abschalten nicht angesteuert. Angesichts der sehr kleinen Gegen-EMK (EMK: ElektroMotorische Kraft) ist der 3-phasige Kurzschluss nicht hilfreich. Der Motor läuft ohne Fluten weiter, was hauptsächlich zwei Nachteile mit sich bringt: So dauert es zum einen eine sehr lange Zeit, bis der Rotor des Motors zum Stillstand kommt. Zum anderen tritt das Problem auf, dass dann, wenn der Motor bzw. die Pumpe inzwischen wieder eingeschaltet werden soll, das Hochschleppen oder Hochfahren angesichts des rotierenden Rotors nicht zuverlässig funktioniert. Es müssen gegebenenfalls mehrere Versuche durchgeführt werden, bis der Rotor erfolgreich bis zur akzeptierbaren Drehzahl hochgeschleppt wird.

Der Erfindung liegt die Aufgabe zugrunde, ein Abbremsverfahren, eine Ansteuervorrichtung sowie eine Vakuumpumpe der eingangs genannten Art anzugeben, mit denen die zuvor erwähnten Nachteile beseitigt sind. Dabei soll auf möglichst einfache und zuverlässige Weise insbesondere erreicht werden, dass der Rotor des geberlosen Permanentmagnet-Synchronmotors nach einem jeweiligen Abschalten des Motors bzw. der Pumpe schneller zum Stillstand kommt und die Gefahr eines fehlerhaften Hochschleppens des Motors bzw. der Pumpe nach einem jeweiligen Wiedereinschalten auf ein Minimum reduziert wird.

Erfindungsgemäß wird diese Aufgabe durch ein Verfahren mit den Merkmalen des Anspruchs 1, eine Vorrichtung mit den Merkmalen des Anspruchs 11 und eine Vakuumpumpe mit den Merkmalen des Anspruchs 12 gelöst. Bevorzugte Ausgestaltungen des erfindungsgemäßen Verfahrens ergeben sich aus den Unteransprüchen, der vorliegenden Beschreibung sowie der Zeichnung.

Das erfindungsgemäße Verfahren zum Abbremsen eines auf der Basis der Pulsweitenmodulation durch eine Raumzeigermodulation betreibbaren geberlosen Permanentmagnet-Synchronmotors, insbesondere eines Permanentmagnet-Synchronmotors einer Vakuumpumpe, bevorzugt einer Turbomolekularpumpe, zeichnet sich dadurch aus, dass der Permanentmagnet-Synchronmotor zum Abbremsen bei offenem Regelkreis nur durch einen rotierenden Spannungsvektor angesteuert wird und das Abbremsverfahren einen Synchronisationsschritt, in dem der Permanentmagnet-Synchronmotor mit einem rotierenden Synchronisations-Spannungsvektor konstanter Amplitude und konstanter Rotationsfrequenz angesteuert wird, und einen zeitlich darauffolgenden Abbremsschritt umfasst, in dem der Permanentmagnet-Synchronmotor mit einem rotierenden Abbrems-Spannungsvektor mit einer zeitlich bis auf den Wert Null abnehmenden Rotationsfrequenz angesteuert wird.

Aufgrund dieser Ausgestaltung des Verfahrens wird auf einfache, zuverlässige Weise erreicht, dass der Rotor des geberlosen Permanentmagnet-Synchronmotors nach einem jeweiligen Abschalten des Motors bzw. der Pumpe sehr schnell zum Stillstand kommt, womit insbesondere auch die Gefahr eines fehlerhaften Hochschleppens des Motors bzw. der Pumpe nach einem jeweiligen Wiedereinschalten des Motors bzw. der Pumpe auf ein Minimum reduziert wird. Der Synchronisationsschritt dient als Übergang zwischen der feldorientierten Regelung und dem Bremsvorgang. Der während dieses Synchronisationsschritts konstant rotierende Spannungsvektor dient dazu, die Rotordrehung mit dem Spannungsvektor zu synchronisieren. Nach einer vordefinierten Zeit beginnt dann der Bremsschritt, bei dem die Rotationsfrequenz des Spannungsvektors bis auf den Wert Null abnimmt.

Während des Abbremsschritts nimmt die Amplitude des rotierenden Abbrems-Spannungsvektors zeitlich bevorzugt linear bis zu einem Endwert > 0 V ab.

Die Rotationsfrequenz des rotierenden Abbrems-Spannungsvektors nimmt während des Abbremsschritts bevorzugt zumindest im Wesentlichen ausgehend von der Rotationsfrequenz des rotierenden Synchronisations-Spannungsvektors zeitlich bis auf den Wert Null ab.

Die Amplitude des rotierenden Abbrems-Spannungsvektors nimmt während des Abbremsschritts bevorzugt zumindest im Wesentlichen ausgehend von der Amplitude des rotierenden Synchronisations-Spannungsvektors zeitlich linear bis zu dem Endwert > 0 V ab.

Bevorzugt wird der Synchronisationsschritt als Übergangsschritt zwischen der feldorientierten Regelung des Permanentmagnet-Synchronmotors und dem Abbremsvorgang über eine vorgebbare Synchronisationszeitdauer durchgeführt, die groß genug ist, um zu bewirken, dass der Rotor des Permanentmagnet-Synchronmotors synchron mit dem rotierenden Synchronisations-Spannungsvektor rotiert.

Damit ist sichergestellt, dass die Rotordrehzahl mit der Rotationsfrequenz des Synchronisations-Spannungsvektors synchronisiert ist, bevor der Bremsvorgang beginnt.

Eine zweckmäßige praktische Ausgestaltung des erfindungsgemäßen Abbremsverfahrens zeichnet sich dadurch aus, dass die Rotationsfrequenz des rotierenden Abbrems-Spannungsvektors während des Abbremsschritts zeitlich linear bis auf den Wert Null abnimmt.

Gemäß einer alternativen vorteilhaften Ausgestaltung des erfindungsgemäßen Verfahrens nimmt die Rotationsfrequenz des rotierenden Abbrems-Spannungsvektors während des Abbremsschritts in zeitlichen Segmenten zeitlich bis auf den Wert Null ab, wobei sie von Segment zu Segment langsamer bzw. mit einer geringeren Rate abnimmt.

Dabei ist insbesondere von Vorteil, wenn die Rotationsfrequenz des Abbrems-Spannungsvektors in einem jeweiligen zeitlichen Segment zeitlich linear abnimmt.

Gemäß einer bevorzugten praktischen Ausgestaltung des erfindungsgemäßen Abbremsverfahrens nimmt die Rotationsfrequenz des rotierenden Abbrems-Spannungsvektors während des Abbremsschritts in zwei aufeinanderfolgenden zeitlichen Segmenten zeitlich bis auf den Wert Null ab, wobei sie in einem zeitlich unmittelbar auf den Synchronisationsschritt folgenden ersten Segment schneller abnimmt als in dem darauffolgenden Segment.

Gemäß einer alternativen zweckmäßigen Ausgestaltung des erfindungsgemäßen Abbremsverfahrens nimmt die Rotationsfrequenz des rotierenden Abbrems-Spannungsvektors während des Abbremsschritts in drei aufeinanderfolgenden zeitlichen Segmenten zeitlich bis auf den Wert Null ab, wobei sie in einem zeitlich unmittelbar auf den Synchronisationsschritt folgenden ersten Segment schneller abnimmt als in dem darauffolgenden zweiten Segment und im zweiten Segment schneller abnimmt als im darauffolgenden dritten Segment, in dem sie schließlich den Wert Null erreicht.

Die erfindungsgemäße Vorrichtung zur Ansteuerung eines geberlosen Permanentmagnet-Synchronmotors auf der Basis der Pulsweitenmodulation, insbesondere zur Ansteuerung eines geberlosen Permanentmagnet-Synchronmotors einer Vakuumpumpe, bevorzugt einer Turbomolekularpumpe, zeichnet sich dadurch aus, dass sie einen Drehstrom-Wechselrichter, insbesondere einen Drehstrom-Zweipunkt-Wechselrichter, und eine Steuerung umfasst und der Drehstrom-Wechselrichter zum Abbremsen des geberlosen Permanentmagnet-Synchronmotors über die Steuerung entsprechend dem erfindungsgemäßen Abbremsverfahren ansteuerbar ist.

Die einen Stator und einen relativ zum Stator um eine Rotationsachse drehbar gelagerten Rotor sowie wenigstens eine Antriebseinheit umfassende erfindungsgemäße Vakuumpumpe, insbesondere Turbomolekularpumpe, zeichnet sich dadurch aus, dass die Antriebseinheit einen geberlosen Permanentmagnet-Synchronmotor umfasst, der durch die erfindungsgemäße Vorrichtung und/oder entsprechend dem erfindungsgemäßen Abbremsverfahren ansteuerbar ist.

Nachfolgend wird die Erfindung beispielhaft anhand vorteilhafter Ausführungsformen unter Bezugnahme auf die beigefügten Figuren beschrieben. Es zeigen:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine schematische Darstellung eines beispielhaften Drehstromwechselrichters, der zur erfindungsgemäßen Ansteuerung eines geberlosen Permanentmagnet-Synchronmotors anwendbar ist,
- Fig. 7: eine schematische Darstellung beispielhafter aktiver Spannungsvektoren für eine Raumzeigermodulation,
- Fig. 8: eine in einem orthogonalen Koordinatensystem dargestellte, durch einen Spannungsvektor repräsentierte beispielhafte willkürliche Spannung,
- Fig. 9: den zeitlichen Verlauf der Rotationsfrequenzen des rotierenden Synchronisations-Spannungsvektors und des rotierenden Abbrems-Spannungsvektors während des Synchronisationsschritts bzw. des Abbremsschritts gemäß einer beispielhaften Ausgestaltung des erfindungsgemäßen Abbremsverfahrens, bei der die Rotationsfrequenz des rotierenden Abbrems-Spannungsvektors während des Abbremsschritts linear bis auf den Wert Null abnimmt,
- Fig. 10: den zeitlichen Verlauf der Amplituden des rotierenden Synchronisations-Spannungsvektors und des rotierenden Abbrems-Spannungsvektors während des Synchronisationsschritts bzw. des Abbremsschritts gemäß einer beispielhaften Ausgestaltung des erfindungsgemäßen Abbremsverfahrens, bei der die Amplitude des rotierenden AbbremsSpannungsvektors während des Abbremsschritts zeitlich linear bis zu einem Endwert > 0 V abnimmt,
- Fig. 11: den zeitlichen Verlauf der Rotationsfrequenzen des rotierenden Synchronisations-Spannungsvektors und des rotierenden Abbrems-Spannungsvektors während des Synchronisationsschritts bzw. des Abbremsschritts gemäß einer beispielhaften Ausgestaltung des erfindungsgemäßen Abbremsverfahrens, bei der die Rotationsfrequenz des rotierenden Abbrems-Spannungsvektors während des Abbremsschritts in zwei aufeinanderfolgenden zeitlichen Segmenten mit unterschiedlicher Geschwindigkeit abnimmt, und
- Fig. 12: den zeitlichen Verlauf der Rotationsfrequenzen des rotierenden Synchronisations-Spannungsvektors und des rotierenden Abbrems-Spannungsvektors während des Synchronisationsschritts bzw. des Abbremsschritts gemäß einer beispielhaften Ausgestaltung des erfindungsgemäßen Abbremsverfahrens, bei der die Rotationsfrequenz des rotierenden Abbrems-Spannungsvektors während des Abbremsschritts in drei aufeinanderfolgenden zeitlichen Segmenten mit unterschiedlicher Geschwindigkeit abnimmt.

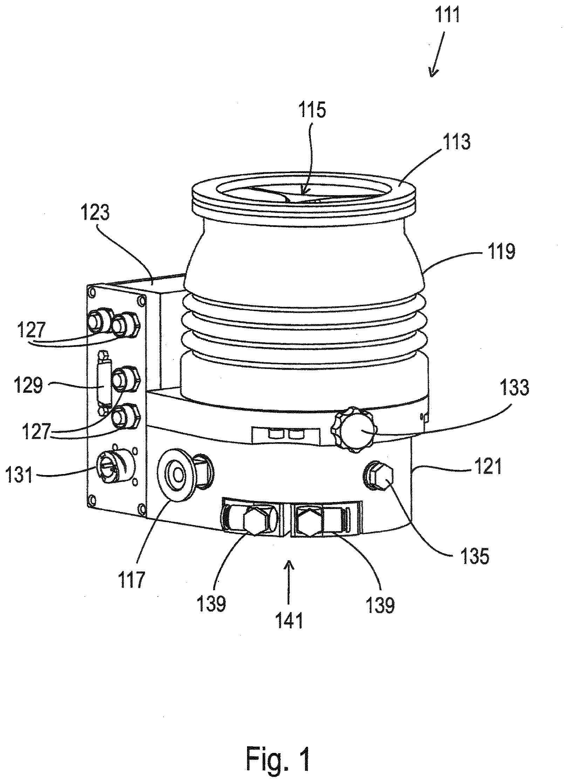

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

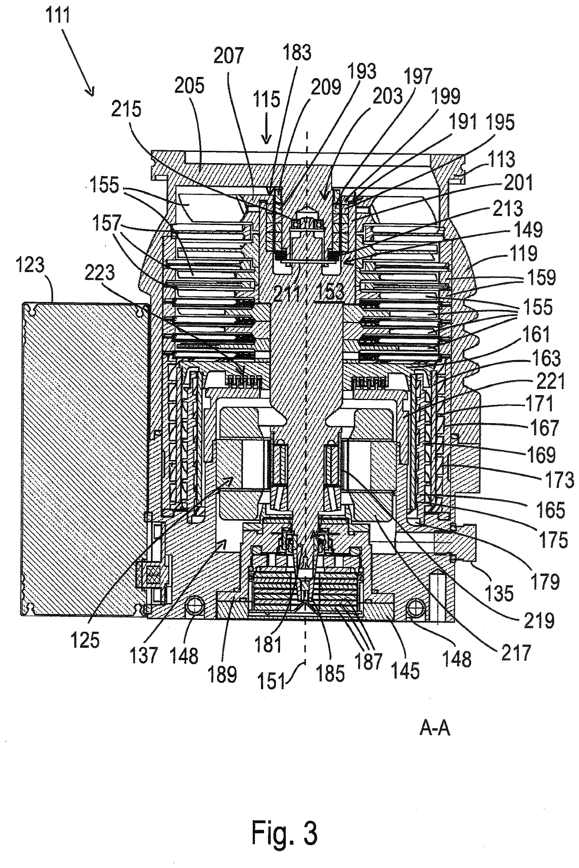

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

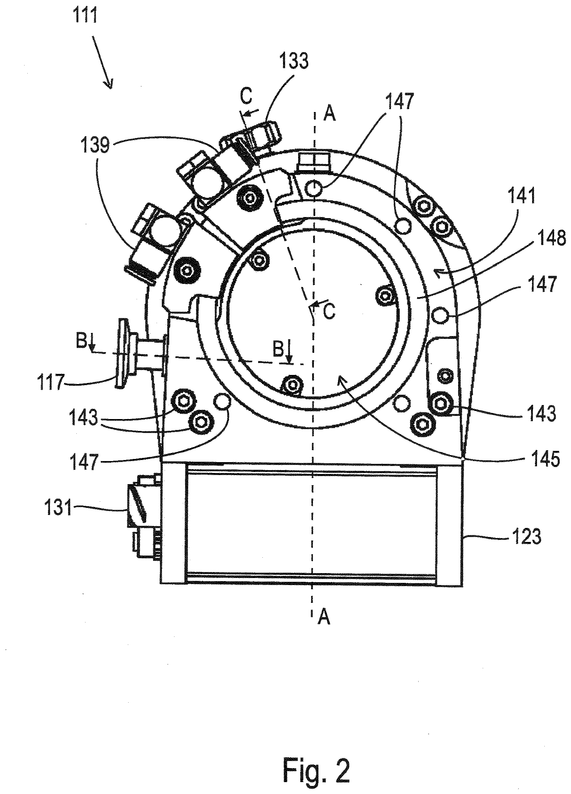

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

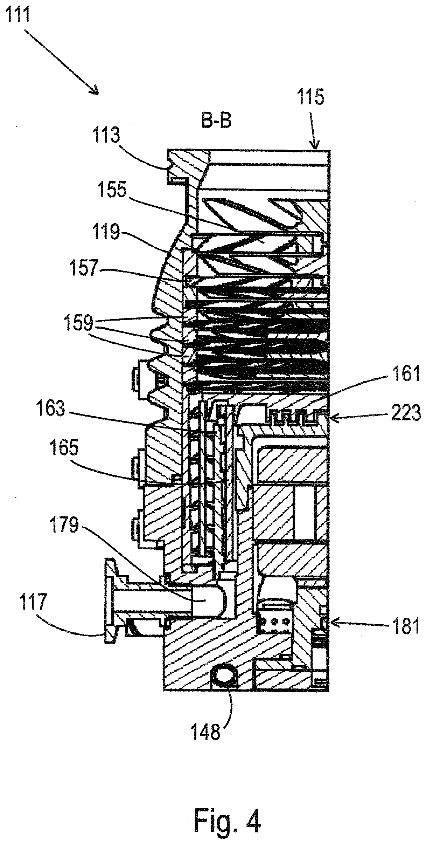

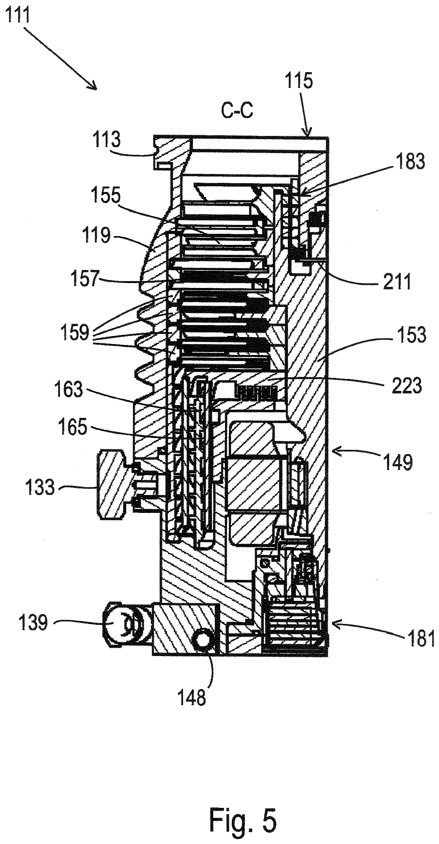

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Die nachstehend erläuterten Ausführungsbeispiele der Erfindung können z.B. in Verbindung mit einer Vakuumpumpe eingesetzt werden, wie sie vorstehend anhand der Fig. 1 bis 5 beschrieben worden ist.

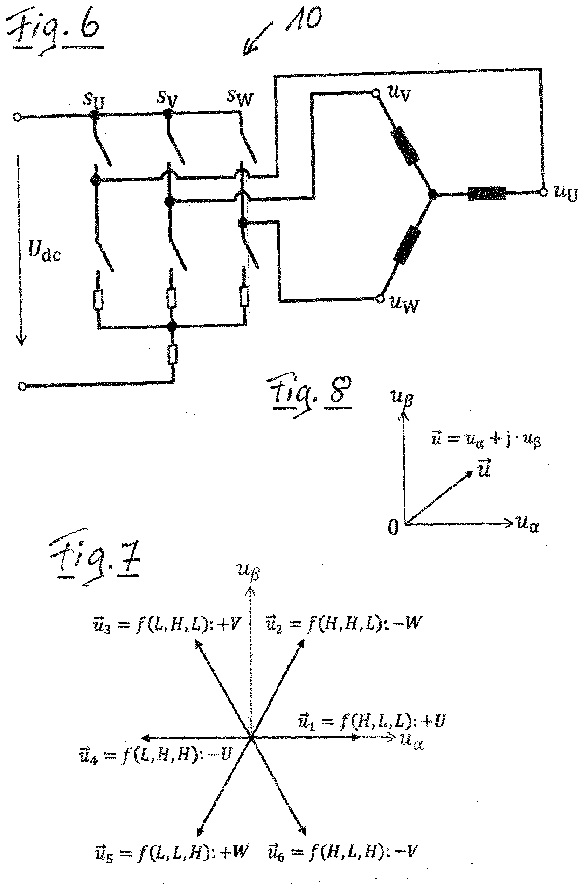

Fig. 6 zeigt in schematischer Darstellung einen beispielhaften Drehstrom-Wechselrichter 10, der für jede der drei Phasen ζ = U, V, W eine Halbbrücke aufweist, so dass die Ausgangsspannung uᵥ, uᵤ, u_{w} einer jeweiligen Phase U, V, W entweder auf das positive oder auf das negative Zwischenkreispotential U_{dc} gelegt werden kann. Das Spannungspotential u_{ζ} einer jeweiligen Phase ζ nimmt den Wert U_{dc} an, wenn der Schaltzustand s_{ζ} = H ist, und den Wert 0 an, wenn der Schaltzustand s_{ζ} = L ist. Bei einem gegebenen Taktverhältnis λ_{ς} ε [0,1] ergibt sich für eine jeweilige Phase ζ eine Spannung u_{ζ} = λ_{ς} x U_{dc}.

Fig. 7 zeigt in schematischer Darstellung beispielhafte aktive Spannungsvektoren für eine Raumzeigermodulation. Dabei sind die Spannungsvektoren *u̅_{ζ}* in einem orthogonalen Koordinatensystem mit dem Realteil u_{α} und dem Imaginärteil u_{β} der Spannungsvektoren entsprechenden Koordinaten dargestellt. Ein jeweiliger aktiver Spannungsvektor *u̅_{ζ}* ist abhängig von den Schaltzuständen der drei Phasen, so dass die folgende Beziehung gilt: *u̅_{ζ}* = f (Su, Sv, Sw). Der Nullvektor uₒ ist durch die Beziehung *̅u̅*̅₀ = f(L, L, L) definiert.

Fig. 8 zeigt eine in einem orthogonalen Koordinatensystem dargestellte, durch einen Spannungsvektor repräsentierte beispielhafte willkürliche Spannung *̅u̅*̅. Die Koordinaten der Spannung *̅u̅*̅ entsprechen wieder dem Realteil u_{α} und dem Imaginärteil u_{β} des betreffenden Spannungsvektors. Eine jeweilige Spannung lässt sich somit durch die folgende Beziehung darstellen: *̅u̅*̅ = u_{α} + j x uβ.

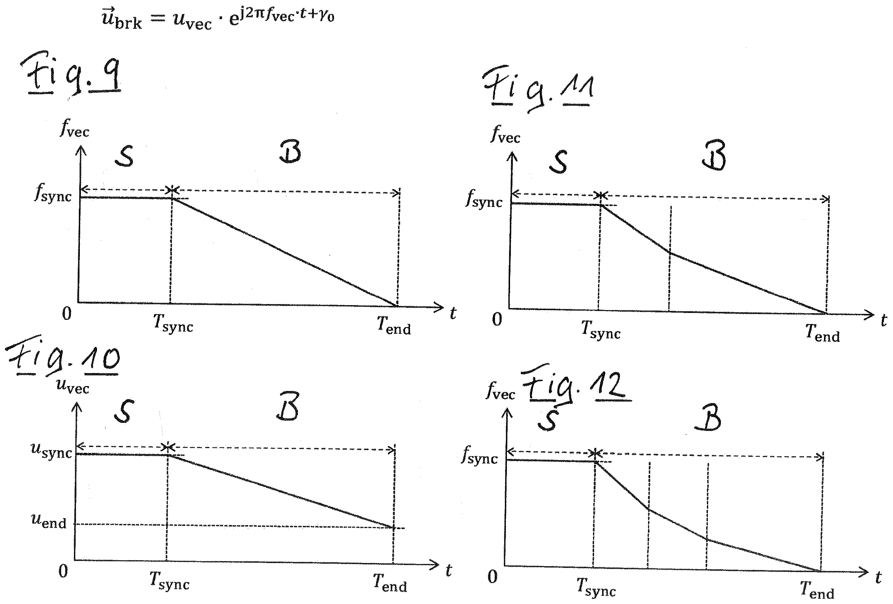

Bei dem erfindungsgemäßen Abbremsverfahren wird beispielsweise ein in der Fig. 6 dargestellter Drehstrom-Wechselrichter 10, insbesondere Drehstrom-Zweipunkt-Wechselrichter, für einen auf der Basis der Pulsweitenmodulation betreibbaren geberlosen Permanentmagnet-Synchronmotor zum Abbremsen bei offenem Regelkreis nur durch einen rotierenden Spannungsvektor angesteuert, der beispielsweise durch die Beziehung *̅u̅*̅_{brk} = *e*^{*j*2*πf_{vec}*·*t*+*γ*₀} definiert werden kann, in der u_{vec} die Amplitude und f_{vec} die Rotationsfrequenz des rotierenden Spannungsvektors, t die Zeit und γ₀ den Anfangswinkel des rotierenden Spannungsvektors am Anfang des gesamten Bremsvorgangs darstellen. Dabei umfasst der Bremsvorgang erfindungsgemäß einen Synchronisationsschritt S, in dem der Permanentmagnet-Synchronmotor mit einem insbesondere auf der Basis der zuvor genannten Beziehung gebildeten rotierenden Synchronisations-Spannungsvektor konstanter Amplitude (u_{vec} = u_{sync}, vgl. Fig. 10) und konstanter Rotationsfrequenz (f_{vec} = f_{sync}, vgl. die Fig. 9, 11 und 12) angesteuert wird, und einen zeitlich darauffolgenden Abbremsschritt B, in dem der Permanentmagnet-Synchronmotor mit einem insbesondere wieder auf der Basis der zuvor genannten Beziehung gebildeten rotierenden Abbrems-Spannungsvektor mit einer zeitlich bis auf den Wert Null abnehmenden Rotationsfrequenz f_{vec} angesteuert wird (vgl. die Fig. 9, 11 und 12).

Der Permanentmagnet-Synchronmotor kann zum Abbremsen bei offenem Regelkreis somit durch einen auf der Beziehung *̅u̅*̅_{brk} = u_{vec} · *e*^{*j*2*πf_{vec}*·*t*+*γ*₀} basierenden rotierenden Spannungsvektor angesteuert werden, der während eines Synchronisationsschritts als rotierender Synchronisations-Spannungsvektor konstanter Amplitude u_{sync} und konstanter Rotationsfrequenz f_{sync} und während eines Abbremsschritts als rotierender Abbrems-Spannungsvektor mit einer zeitlich bis auf den Wert Null abnehmenden Rotationsfrequenz f_{vec} ausgeübt wird.

Dabei kann die Amplitude u_{vec} des rotierenden Abbrems-Spannungsvektors während des Abbremsschritts B zeitlich linear bis zu einem Endwert u_{end} > 0 V abnehmen (vgl. Fig. 10).

Wie aus den Fig. 9, 11 und 12 ersichtlich, kann die Rotationsfrequenz f_{vec} des Abbrems-Spannungsvektors während des Abbremsschritts B ausgehend von der Rotationsfrequenz f_{sync} des Synchronisations-Spannungsvektors zeitlich bis auf den Wert Null abnehmen.

Der Synchronisationsschritt S endet jeweils zum Zeitpunkt T_{sync}, während der Abbremsschritt B jeweils zum Zeitpunkt T_{end} endet.

Die Amplitude u_{vec} des während des Abbremsschritts B ausgeübten rotierenden Abbrems-Spannungsvektors kann ausgehend von der Amplitude u_{sync} des während des Synchronisationsschritts S ausgeübten Synchronisations-Spannungsvektors zeitlich linear bis zum Endwert _{Uend} > 0 V abnehmen (vgl. Fig. 10).

Der Synchronisationsschritt S wird als Übergangsschritt zwischen der feldorientierten Regelung des Permanentmagnet-Synchronmotors und dem Abbremsvorgang über die vorgebbare Synchronisationszeitdauer T_{sync} durchgeführt, die groß genug ist, um zu bewirken, dass der Rotor des Permanentmagnet-Synchronmotors schließlich synchron mit dem rotierenden Synchronisations-Spannungsvektor rotiert.

Wie aus der Fig. 9 ersichtlich, kann die Rotationsfrequenz f_{vec} des rotierenden Abbrems-Spannungsvektors während des Abbremsschritts B zeitlich linear bis auf den Wert Null abnehmen.

Dagegen zeigen die Fig. 11 und 12 beispielhafte Ausgestaltungen des erfindungsgemäßen Abbremsverfahrens, bei denen die Rotationsfrequenz f_{vec} des rotierenden Abbrems-Spannungsvektors während des Abbremsschritts B jeweils in zeitlichen Segmenten zeitlich bis auf den Wert Null abnimmt, wobei sie von Segment zu Segment langsamer bzw. mit einer geringeren Rate abnimmt. Hierbei nimmt die Rotationsfrequenz f_{vec} des rotierenden Abbrems-Spannungsvektors in einem jeweiligen zeitlichen Segment zeitlich linear ab.

Dabei nimmt bei dem in der Fig. 11 dargestellten Ausführungsbeispiel die Rotationsfrequenz f_{vec} des rotierenden Abbrems-Spannungsvektors während des Abbremsschritts B in zwei aufeinanderfolgenden zeitlichen Segmenten zeitlich bis auf den Wert Null ab, wobei sie in einem zeitlich unmittelbar auf den Synchronisationsschritt S folgenden ersten Segment schneller abnimmt als in dem darauffolgenden Segment.

Dagegen zeigt Fig. 12 eine weitere Abwandlung des erfindungsgemäßen Abbremsverfahrens, gemäß der die Rotationsfrequenz f_{vec} des rotierenden Abbrems-Spannungsvektors während des Abbremsschritts B in drei aufeinanderfolgenden zeitlichen Segmenten zeitlich bis auf den Wert Null abnimmt, wobei sie in einem zeitlich unmittelbar auf den Synchronisationsschritt S folgenden ersten Segment schneller abnimmt als in dem darauffolgenden zweiten Segment und im zweiten Segment schneller abnimmt als im darauffolgenden dritten Segment, in dem sie schließlich den Wert Null erreicht.

Eine erfindungsgemäße Vorrichtung zur Ansteuerung eines geberlosen Permanentmagnet-Synchronmotors auf der Basis der Pulsweitenmodulation umfasst einen Drehstrom-Wechselrichter 10, insbesondere einen Drehstrom-Zweipunkt-Wechselrichter, und eine Steuerung. Dabei kann es sich bei dem Drehstrom-Wechselrichter 10 der erfindungsgemäßen Vorrichtung beispielsweise um einen Wechselrichter der in der Fig. 6 dargestellten Art handeln. Über die Steuerung der erfindungsgemäßen Vorrichtung ist der Drehstrom-Wechselrichter 10 entsprechend dem erfindungsgemäßen Abbremsverfahren ansteuerbar.

Das erfindungsgemäße Abbremsverfahren sowie die erfindungsgemäße Vorrichtung sind insbesondere zur Ansteuerung einer jeweiligen Antriebseinheit einer Vakuumpumpe, insbesondere Turbomolekularpumpe, beispielsweise zur Ansteuerung einer Vakuumpumpe, insbesondere Turbomolekularpumpe, der in den Fig. 1 bis 5 dargestellten Art anwendbar.

Die erfindungsgemäße Vakuumpumpe, insbesondere Turbomolekularpumpe, umfasst einen Stator und einen relativ zum Stator um eine Rotationsachse drehbar gelagerten Rotor sowie wenigstens eine Antriebseinheit. Dabei kann die Antriebseinheit insbesondere einen geberlosen Permanentmagnet-Synchronmotor umfassen, der durch eine erfindungsgemäße Vorrichtung und entsprechend dem erfindungsgemäßen Abbremsverfahren ansteuerbar ist. Dabei kann die Vakuumpumpe, insbesondere Turbomolekularpumpe, beispielsweise in der in den Fig. 1 bis 5 dargestellten Art ausgeführt sein.

### Bezugszeichenliste

- 10: Drehstrom-Wechselrichter
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung

- f_{sync}: konstante Rotationsfrequenz des rotierenden Synchronisations-Spannungsvektors
- f_{vec}: Rotationsfrequenz des rotierenden Spannungsvektors
- u_{sync}: konstante Amplitude des rotierenden Synchronisations-Spannungsvektors
- u_{vec}: Amplitude des rotierenden Spannungsvektors
- B: Abbremsschritt
- S: Synchronisationsschritt
- T_{end}: Endzeitpunkt des Synchronisationsschritts
- T_{sync}: Synchronisationszeitdauer

## Patentansprüche

1. Verfahren zum Abbremsen eines auf der Basis der Pulsweitenmodulation durch eine Raumzeigermodulation betreibbaren geberlosen Permanentmagnet-Synchronmotors, insbesondere eines Permanentmagnet-Synchronmotors einer Vakuumpumpe, bevorzugt einer Turbomolekularpumpe, bei dem der Permanentmagnet-Synchronmotor zum Abbremsen bei offenem Regelkreis nur durch einen rotierenden Spannungsvektor (*̅u̅*̅_{brk}) angesteuert wird, **dadurch gekennzeichnet, daß** das Abbremsverfahren einen Synchronisationsschritt (S) umfasst, in dem der Permanentmagnet-Synchronmotor mit einem rotierenden Synchronisations-Spannungsvektor konstanter Amplitude (u_{sync}) und konstanter Rotationsfrequenz (fsync) angesteuert wird, und einen zeitlich darauffolgenden Abbremsschritt (B) umfasst, in dem der Permanentmagnet-Synchronmotor mit einem rotierenden Abbrems-Spannungsvektor mit einer zeitlich bis auf den Wert Null abnehmenden Rotationsfrequenz (f_{vec}) angesteuert wird.

2. Abbremsverfahren nach Anspruch 1,
**dadurch gekennzeichnet,**
**dass** die Amplitude (u_{vec}) des rotierenden Abbrems-Spannungsvektors während des Abbremsschritts (B) zeitlich linear bis zu einem Endwert (u_{end}) > 0 V abnimmt.

3. Abbremsverfahren nach Anspruch 1 oder 2,
**dadurch gekennzeichnet,**
**dass** die Rotationsfrequenz (f_{vec}) des rotierenden Abbrems-Spannungsvektors während des Abbremsschritts (B) zumindest im Wesentlichen ausgehend von der Rotationsfrequenz (f_{sync}) des rotierenden Synchronisations-Spannungsvektors zeitlich bis auf den Wert Null abnimmt.

4. Abbremsverfahren nach einem der vorhergehenden Ansprüche,
**dadurch gekennzeichnet,**
**dass** die Amplitude (u_{vec}) des rotierenden Abbrems-Spannungsvektors während des Abbremsschritts (B) zumindest im Wesentlichen ausgehend von der Amplitude (u_{sync}) des rotierenden Synchronisations-Spannungsvektors zeitlich linear bis zu dem Endwert (u_{end}) > 0 V abnimmt.

5. Abbremsverfahren nach einem der vorhergehenden Ansprüche,
**dadurch gekennzeichnet,**
**dass** der Synchronisationsschritt (S) als Übergangsschritt zwischen der feldorientierten Regelung des Permanentmagnet-Synchronmotors und dem Abbremsvorgang über eine vorgebbare Synchronisationszeitdauer (T_{sync}) durchgeführt wird, die groß genug ist zu bewirken, dass der Rotor des Permanentmagnet-Synchronmotors synchron mit dem rotierenden Synchronisations-Spannungsvektor rotiert.

6. Abbremsverfahren nach einem der vorhergehenden Ansprüche,
**dadurch gekennzeichnet,**
**dass** die Rotationsfrequenz (f_{vec}) des rotierenden Abbrems-Spannungsvektors während des Abbremsschritts (B) zeitlich linear bis auf den Wert Null abnimmt.

7. Abbremsverfahren nach einem der Ansprüche 1 bis 5,
**dadurch gekennzeichnet,**
**dass** die Rotationsfrequenz (f_{vec}) des rotierenden Abbrems-Spannungsvektors während des Abbremsschritts (B) in zeitlichen Segmenten zeitlich bis auf den Wert Null abnimmt, wobei sie von Segment zu Segment langsamer oder mit einer geringeren Rate abnimmt.

8. Abbremsverfahren nach Anspruch 7,
**dadurch gekennzeichnet,**
**dass** die Rotationsfrequenz (f_{vec}) des rotierenden Abbrems-Spannungsvektors in einem jeweiligen zeitlichen Segment zeitlich linear abnimmt.

9. Abbremsverfahren nach Anspruch 7 oder 8,
**dadurch gekennzeichnet,**
**dass** die Rotationsfrequenz (f_{vec}) des rotierenden Abbrems-Spannungsvektors während des Abbremsschritts (B) in zwei aufeinanderfolgenden zeitlichen Segmenten zeitlich bis auf den Wert Null abnimmt, wobei sie in einem zeitlich unmittelbar auf den Synchronisationsschritt (S) folgenden ersten Segment schneller abnimmt als in dem darauffolgenden Segment.

10. Abbremsverfahren nach Anspruch 7 oder 8,
**dadurch gekennzeichnet,**
**dass** die Rotationsfrequenz (f_{vec}) des rotierenden Abbrems-Spannungsvektors während des Abbremsschritts (B) in drei aufeinanderfolgenden zeitlichen Segmenten zeitlich bis auf den Wert Null abnimmt, wobei sie in einem zeitlich unmittelbar auf den Synchronisationsschritt (S) folgenden ersten Segment schneller abnimmt als in dem darauffolgenden zweiten Segment und im zweiten Segment schneller abnimmt als im darauffolgenden dritten Segment, in dem sie schließlich den Wert Null erreicht.

11. Vorrichtung zur Ansteuerung eines geberlosen Permanentmagnet-Synchronmotors auf der Basis der Pulsweitenmodulation, insbesondere zur Ansteuerung eines geberlosen Permanentmagnet-Synchronmotors einer Vakuumpumpe, bevorzugt einer Turbomolekularpumpe, mit einem Drehstrom-Wechselrichter (10), insbesondere einem Drehstrom-Zweipunkt-Wechselrichter, und einer Steuerung, wobei der Drehstrom-Wechselrichter (10) zum Abbremsen des geberlosen Permanentmagnet-Synchronmotors über die Steuerung entsprechend dem Abbremsverfahren nach einem der vorhergehenden Ansprüche ansteuerbar ist.

12. Vakuumpumpe, insbesondere Turbomolekularpumpe, mit einem Stator und einem relativ zum Stator um eine Rotationsachse drehbar gelagerten Rotor und wenigstens einer Antriebseinheit, wobei die Antriebseinheit einen geberlosen Permanentmagnet-Synchronmotor umfasst, der durch eine Vorrichtung gemäß Anspruch 11 und entsprechend dem Abbremsverfahren nach einem der Ansprüche 1 bis 10 ansteuerbar ist.

## Claims

1. A method of decelerating an encoderless permanent magnet synchronous motor which can be operated on the basis of the pulse width modulation by a space vector modulation, in particular a permanent magnet synchronous motor of a vacuum pump, preferably of a turbomolecular pump, in which method the permanent magnet synchronous motor is only controlled by a rotating voltage vector (*̅u̅*̅_{brk}) to decelerate with open control loop, **characterized in that** the deceleration method comprises a synchronization step (S) in which the permanent magnet synchronous motor is controlled by a rotating synchronization voltage vector having a constant amplitude (u_{sync}) and a constant rotational frequency (f_{sync}); and a deceleration step (B) which follows said synchronization step (S) in time and in which the permanent magnet synchronous motor is controlled by a rotating deceleration voltage vector having a rotational frequency (f_{vec}) which decreases in time down to the value zero.

2. A deceleration method in accordance with claim 1,
**characterized in that**
the amplitude (u_{vec}) of the rotating deceleration voltage vector decreases linearly in time down to a final value (u_{end}) > 0 V during the deceleration step (B).

3. A deceleration method in accordance with claim 1 or claim 2,
**characterized in that**
the rotational frequency (f_{vec}) of the rotating deceleration voltage vector decreases in time down to the value zero during the deceleration step (B), at least substantially starting from the rotational frequency (f_{sync}) of the rotating synchronization voltage vector.

4. A deceleration method in accordance with any one of the preceding claims,
**characterized in that**
the amplitude (u_{vec}) of the rotating deceleration voltage vector decreases linearly in time down to the final value (u_{end}) > 0 V during the deceleration step (B), at least substantially starting from the amplitude (u_{sync}) of the rotating synchronization voltage vector.

5. A deceleration method in accordance with any one of the preceding claims,
**characterized in that**
the synchronization step (S) is performed as a transition step between the field-oriented regulation of the permanent magnet synchronous motor and the deceleration process over a predefinable synchronization period (T_{sync}) which is large enough to cause the rotor of the permanent magnet synchronous motor to rotate synchronously with the rotating synchronization voltage vector.

6. A deceleration method in accordance with any one of the preceding claims,
**characterized in that**
the rotational frequency (f_{vec}) of the rotating deceleration voltage vector decreases linearly in time down to the value zero during the deceleration step (B).

7. A deceleration method in accordance with any one of the claims 1 to 5,
**characterized in that**
the rotational frequency (f_{vec}) of the rotating deceleration voltage vector decreases in time in time segments down to the value zero during the deceleration step (B), with it decreasing more slowly or at a lower rate from segment to segment.

8. A deceleration method in accordance with claim 7,
**characterized in that**
the rotational frequency (f_{vec}) of the rotating deceleration voltage vector decreases linearly in time in a respective time segment.

9. A deceleration method in accordance with claim 7 or claim 8,
**characterized in that**
the rotational frequency (f_{vec}) of the rotating deceleration voltage vector decreases in time in two consecutive time segments down to the value zero during the deceleration step (B), with it decreasing faster in a first segment which follows the synchronization step (S) directly in time than in the subsequent segment.

10. A deceleration method in accordance with claim 7 or claim 8,
**characterized in that**
the rotational frequency (f_{vec}) of the rotating deceleration voltage vector decreases in time in three consecutive time segments down to the value zero during the deceleration step (B), with it decreasing faster in a first segment which follows the synchronization step (S) directly in time than in the subsequent second segment and decreasing faster in the second segment than in the subsequent third segment in which it finally reaches the value zero.

11. An apparatus for controlling an encoderless permanent magnet synchronous motor on the basis of the pulse width modulation, in particular for controlling an encoderless permanent magnet synchronous motor of a vacuum pump, preferably of a turbomolecular pump, comprising a three-phase inverter (10), in particular a three-phase two-point inverter, and a control, wherein the three-phase inverter (10) can be controlled to decelerate the encoderless permanent magnet synchronous motor via the control in accordance with the deceleration method in accordance with any one of the preceding claims.

12. A vacuum pump, in particular a turbomolecular pump, comprising a stator; a rotor rotatably supported about an axis of rotation relative to the stator; and at least one drive unit, wherein the drive unit comprises an encoderless permanent magnet synchronous motor which can be controlled by an apparatus in accordance with claim 11 and in accordance with the deceleration method in accordance with any one of the claims 1 to 10.

## Revendications

1. Procédé de décélération d'un moteur synchrone à aimants permanents sans capteur, susceptible de fonctionner sur la base de la modulation de largeur d'impulsions par une modulation de vecteur spatial, en particulier d'un moteur synchrone à aimants permanents d'une pompe à vide, de préférence d'une pompe turbomoléculaire, dans lequel le moteur synchrone à aimants permanents, en vue de le décélérer en boucle ouverte, est piloté uniquement par un vecteur de tension rotatif (*̅u̅*̅_{brk}),
**caractérisé en ce que**
le procédé de décélération comprend une étape de synchronisation (S) dans laquelle le moteur synchrone à aimants permanents est piloté avec un vecteur de tension de synchronisation rotatif d'amplitude constante (u_{sync}) et de fréquence de rotation constante (f_{sync}), et une étape de décélération (B) qui suit dans le temps et dans laquelle le moteur synchrone à aimants permanents est piloté avec un vecteur de tension de décélération rotatif ayant une fréquence de rotation (f_{vec}) qui diminue dans le temps jusqu'à la valeur zéro.

2. Procédé de décélération selon la revendication 1,
**caractérisé en ce que**
pendant l'étape de décélération (B), l'amplitude (u_{vec}) du vecteur de tension de décélération rotatif diminue linéairement dans le temps jusqu'à une valeur finale (u_{end}) > 0 V.

3. Procédé de décélération selon la revendication 1 ou 2,
**caractérisé en ce que**
pendant l'étape de décélération (B), la fréquence de rotation (f_{vec}) du vecteur de tension de décélération rotatif diminue dans le temps jusqu'à la valeur zéro au moins sensiblement à partir de la fréquence de rotation (f_{sync}) du vecteur de tension de synchronisation rotatif.

4. Procédé de décélération selon l'une des revendications précédentes,
**caractérisée en ce que**
pendant l'étape de décélération (B), l'amplitude (u_{vec}) du vecteur de tension de décélération rotatif diminue linéairement dans le temps jusqu'à la valeur finale (u_{end}) > 0 V au moins sensiblement à partir de l'amplitude (u_{sync}) du vecteur de tension de synchronisation rotatif.

5. Procédé de décélération selon l'une des revendications précédentes,
**caractérisé en ce que**
l'étape de synchronisation (S) est effectuée comme une étape de transition entre la commande à flux orienté du moteur synchrone à aimants permanents et l'opération de décélération sur une durée de synchronisation (T_{sync}) prédéterminée qui est suffisamment importante pour amener le rotor du moteur synchrone à aimants permanents à tourner de manière synchrone avec le vecteur de tension de synchronisation rotatif.

6. Procédé de décélération selon l'une des revendications précédentes,
**caractérisé en ce que**
pendant l'étape de décélération (B), la fréquence de rotation (f_{vec}) du vecteur de tension de décélération rotatif diminue linéairement dans le temps jusqu'à une valeur zéro.

7. Procédé de décélération selon l'une des revendications 1 à 5,
**caractérisé en ce que**
pendant l'étape de décélération (B), la fréquence de rotation (f_{vec}) du vecteur de tension de décélération rotatif diminue dans le temps en segments temporels jusqu'à la valeur zéro, en diminuant plus lentement ou à un taux inférieur d'un segment à l'autre.

8. Procédé de décélération selon la revendication 7,
**caractérisé en ce que**
la fréquence de rotation (f_{vec}) du vecteur de tension de décélération rotatif diminue linéairement dans le temps dans un segment temporel respectif.

9. Procédé de décélération selon la revendication 7 ou 8,
**caractérisé en ce que**
pendant l'étape de décélération (B), la fréquence de rotation (f_{vec}) du vecteur de tension de décélération rotatif diminue dans le temps en deux segments temporels successifs, en diminuant plus rapidement dans un premier segment, suivant immédiatement dans le temps l'étape de synchronisation (S), que dans le prochain segment.

10. Procédé de décélération selon la revendication 7 ou 8,
**caractérisé en ce que**
pendant l'étape de décélération (B), la fréquence de rotation (f_{vec}) du vecteur de tension de décélération rotatif diminue dans le temps en trois segments temporels successifs jusqu'à la valeur zéro, en diminuant plus rapidement dans un premier segment, suivant immédiatement dans le temps l'étape de synchronisation (S), que dans le deuxième segment suivant, et en diminuant plus rapidement dans le deuxième segment que dans le troisième segment suivant dans lequel elle atteint finalement la valeur zéro.

11. Dispositif pour piloter un moteur synchrone à aimants permanents sans capteur sur la base de la modulation de largeur d'impulsion, en particulier pour piloter un moteur synchrone à aimants permanents sans capteur d'une pompe à vide, de préférence d'une pompe turbomoléculaire, comportant un onduleur triphasé (10), en particulier un onduleur triphasé deux niveaux, et un contrôleur,
dans lequel, afin de décélérer le moteur synchrone à aimants permanents sans capteur, l'onduleur triphasé (10) peut être piloté par le contrôleur conformément au procédé de décélération selon l'une des revendications précédentes.

12. Pompe à vide, en particulier pompe turbomoléculaire, comprenant un stator et un rotor monté mobile en rotation par rapport au stator autour d'un axe de rotation, et au moins une unité d'entraînement,
dans laquelle l'unité d'entraînement comprend un moteur synchrone à aimants permanents sans capteur qui peut être piloté par un dispositif selon la revendication 11 et conformément au procédé de décélération selon l'une des revendications 1 à 10.
